# EUROPEAN PATENT SPECIFICATION

(11) **EP 2 899 871 B1**
(45) Date of publication and mention of the grant of the patent: **23.03.2022**
(21) Application number: 13839204.8
(22) Date of filing: 02.08.2013
(51) Int. Cl.: H02P 3/04, B66C 13/30, B66B 5/00, H02P 29/032

(54) **ELECTROMAGNETIC BRAKE CONTROL DEVICE**
ELEKTROMAGNETISCHE BREMSSTEUERUNGSVORRICHTUNG
DISPOSITIF DE COMMANDE DE FREIN ÉLECTROMAGNÉTIQUE

(30) Priority: 21.09.2012 JP 2012207688
(43) Date of publication of application: 29.07.2015
(73) Proprietor: Fuji Electric Co., Ltd., Kawasaki-shi Kanagawa 210-9530 (JP)
(72) Inventor: NAKATO Yoshiyuki, Kawasaki-shi Kanagawa 210-9530 (JP)
(74) Representative: Appelt, Christian W.
(86) International application number: PCT/JP2013/070976
(87) International publication number: WO 2014/045728

(56) References cited:
- EP-A1- 2 492 231
- WO-A1-2011/048664
- WO-A2-2005/047157
- DE-A1-102008 058 303
- JP-A- H08 182 365
- JP-A- 2005 126 183
- JP-A- 2008 265 931
- JP-A- 2011 105 455

## Description

### Technical Field

The present invention relates to an electromagnetic brake control device including safety functions corresponding to predetermined function safety standards, and in particular, relates to a non-excitation operation type electromagnetic brake control device such that an electromagnetic brake is engaged when an exciting coil is in a non-excited state.

### Background Art

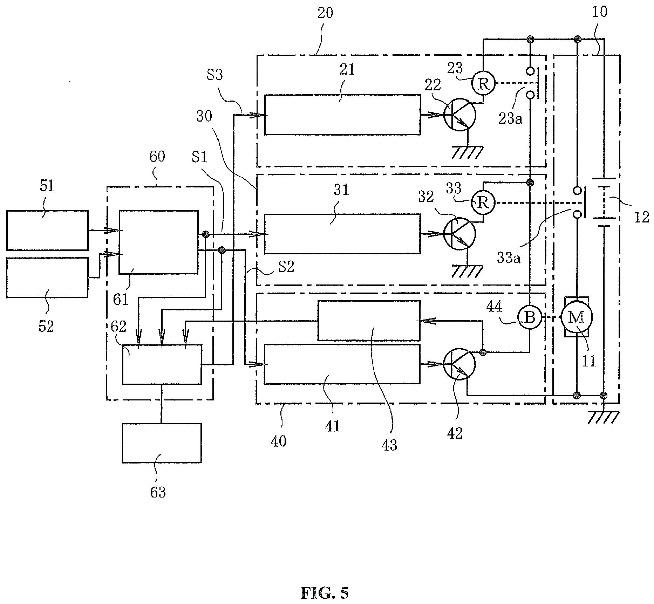

Fig. 5 shows heretofore known technology of a motor control circuit having a non-excitation operation type electromagnetic brake.

In Fig. 5, 10 is a motor drive unit, and includes a motor 11 and direct current power supply 12. 20 is a power supply control circuit, and includes a transistor drive circuit 21, a transistor 22, and a relay 23. 23a is a control contact driven by the relay 23.

Also, 30 is a motor drive control unit, and includes a transistor drive circuit 31, a transistor 32, and a relay 33. 33a is a drive contact driven by the relay 33.

40 is an electromagnetic brake control unit, and includes a transistor drive circuit 41, a transistor 42, excitation state detection means 43, and an electromagnetic brake 44. The electromagnetic brake 44 is such that braking is released by an exciting coil (not shown) being excited by the transistor 42 being turned on in a state wherein the control contact 23a is in an on-state, while braking is engaged and a braking operation carried out by the control contact 23a being switched off.

Furthermore, 51 is start signal generation means, and 52 is stop signal generation means. 60 is a cruise control unit, and includes a control command generation unit 61, failure determination means 62, and external alarm generation means 63.

Herein, a drive control command S1 output from the control command generation unit 61 is input into the transistor drive circuit 31 and failure determination means 62. A brake control command S2 output from the control command generation unit 61 is input into the transistor drive circuit 41 and failure determination means 62. Also, a failure determination signal S3 output from the failure determination means 62 is input into the transistor drive circuit 21.

Next, a simple description will be given of an operation of the heretofore known technology.

The failure determination means 62 determines whether or not there is a failure in the electromagnetic brake control unit 40, based on the excitation state of the electromagnetic brake 44 detected by the excitation state detection means 43 and on the existence or otherwise of the drive control command S1 and brake control command S2. Herein, a failure in the electromagnetic brake control unit 40 refers to, for example, a failure in the transistor 42, a disconnection of the exciting coil of the electromagnetic brake 44, or the like.

When a failure is detected in the electromagnetic brake control unit 40, the failure determination signal S3 output from the failure determination means 62 is input into the power supply control circuit 20, and the control contact 23a linked to the relay 23 is switched to an off-state by the transistor 22 being caused to be turned off by the transistor drive circuit 21. Because of this, the supply of power to the motor drive control unit 30 and electromagnetic brake control unit 40 is stopped, putting the two control units 30 and 40 into a non-operating state, because of which the motor 11 takes on a stopped state and the electromagnetic brake 44 an engaged state, thus preventing burnout or runaway of the motor 11.

### Citation List

### Patent Literature

PTL 1: JP-A-8-182365 (Paragraphs [0021] to [0036], Fig. 1, Fig. 3, and the like)

WO 2005/047157 A2 describes a control circuit for controlling an electromechanical elevator brake, said control circuit comprising at least one brake coil, a direct-voltage source, a semiconductor switch arrangement and a control unit for controlling the circuit, and which circuit further comprises a current measuring unit producing current data that can be passed to the control unit. The circuit comprises at least two semiconductor switches, and these can be controlled by the control unit in an alternate manner such that the working condition of each switch can be checked in its turn on the basis of feedback data obtained from the current measurement.

EP 2 492 231 A1 describes that there is provided a safety device for an elevator capable of detecting a failure of each of two relay drivers provided corresponding to a relay for shutting off the power supply to a motor or a brake. For this purpose, the configuration is made such that cooperative operation is carried out so that one of the first and second arithmetic units issues a drive instruction, and also the other of the first and second arithmetic units issues a shut-off instruction; and the first and second arithmetic units make a failure diagnosis on the first and second drivers based on the output state of the diagnosing contact signal generated by the contact signal outputting unit during the cooperative operation.

DE 10 2008 058 303 A1 describes a method for operating a drive and a drive, wherein the drive comprises at least one motor having a rotor shaft that can be loaded by a brake torque created by at least one brake comprising a powered brake coil, wherein the brake coil is arranged in series with two switches by which the coil current can be controlled, wherein the first switch is activated by a first control circuit and the second switch is activated by a second control circuit, wherein the switches are opened to produce the unpowered state of the brake coil and one of the two switches periodically receives a control signal, particularly briefly, to attain the closed state in this period, wherein an inspection of the effect of this respective control signal takes place and, in the case of a negative result of the inspection, warning information is output and/or the drive is transferred to a secure state and/or deactivation of the drive is carried out.

### Summary of Invention

### Technical Problem

The heretofore known technology of Fig. 5 is such that, when a failure occurs in the electromagnetic brake control unit 40, the electromagnetic brake 44 is engaged by the control contact 23a being turned off based on the failure determination signal S3 from the failure determination means 62. As opposed to this, when there is normal braking, the transistor 42 is caused to be turned off in accordance with the brake control command S2 output from the control command generation unit 61, whereby the electromagnetic brake 44 is engaged.

That is, when a failure occurs in the electromagnetic brake control unit 40, a circuit differing from that when there is normal braking is caused to operate, because of which there is concern about the time until the electromagnetic brake 44 is engaged being long in comparison with when there is normal braking. Because of this, when wishing to stop the motor 11 by braking immediately when a failure occurs, there is a possibility of accompanying danger.

Also, as a failure in the electromagnetic brake control unit 40 cannot be determined unless the brake control command S2 is input and the electromagnetic brake 44 actually engaged, there is no option but to depend on manual operation in order to check the adequacy of the operation of the electromagnetic brake control unit 40.

Furthermore, the heretofore known technology of Fig. 5 is such that overvoltage or overcurrent, when applied to or caused to flow through the exciting coil or transistor 42 due to trouble or a setting mistake of the direct current power supply 12, failure in the exciting coil, or the like, contributes to failure caused by overexcitation or overheat, and there is concern about the transistor 42 short-circuiting, becoming unable to interrupt, or the like.

Therefore, an object of the invention is to provide an electromagnetic brake control device such that the time until the brake is engaged is constant, regardless of the existence or otherwise of trouble, thus improving safety.

Also, another object of the invention is to provide an electromagnetic brake control device such that safety is improved by a sequence check of the adequacy of an operation of a control circuit being carried out when starting up.

Furthermore, an object of the invention is to provide an electromagnetic brake control device such that a function of monitoring overvoltage and overcurrent is improved. Solution to Problem

The aforementioned problems are solved with an electromagnetic brake control device according to claim 1.

In order to resolve the heretofore described problems, an electromagnetic brake control device of the invention is a so-called non-excitation operation type electromagnetic brake control device including a first brake control circuit having a first operation unit that carries out an operation process in accordance with a brake command and a first switch turned on in accordance with a brake signal based on an operation output signal of the first operation unit, and a second brake control circuit having a second operation unit and second switch having the same kinds of function. Further, by the first switch and second switch being connected in series between a brake power supply and the electromagnetic brake, a power path from the brake power supply to the electromagnetic brake is cut off, and the electromagnetic brake engaged, when trouble such as a failure occurs in at least one of the first brake control circuit and second brake control circuit.

Herein, the first switch and second switch are configured of, for example, main contacts of a relay.

The invention is such that it is preferable that monitoring of whether the operations of the first brake control circuit and second brake control circuit are normal or abnormal is carried out by a brake signal provided to the first switch and an operation signal of the second switch being fed back to the first operation unit, and a brake signal provided to the second switch and an operation signal of the first switch being fed back to the second operation unit.

In addition, it is good when a voltage abnormality or current abnormality of a drive power supply of the first switch and second switch is detected and, when abnormality signals thereof are generated, the first operation unit and second operation unit carry out operation processes so that brake signals causing the first switch and second switch respectively to be turned off are caused to be output.

Also, it is desirable that, in order to confirm the operation of each brake control circuit, brake commands are sequentially input into the first operation unit and second operation unit immediately after the turning on of the brake power supply, and the first operation unit and second operation unit execute a sequence check that monitors brake signals provided to each of the first switch and second switch and operation signals of the first switch and second switch.

A current detector that detects a current abnormality of a drive power supply of the first switch and second switch may be provided corresponding with either one of the switches, or may be configured disposed corresponding with each switch, so that a current abnormality signal from the current detector corresponding to the first switch is input into the first operation unit, and a current abnormality signal from the current detector corresponding to the second switch is input into the second operation unit.

### Advantageous Effects of Invention

According to the invention, the electromagnetic brake is controlled by the brake control circuit being duplicated, because of which, even when a single failure occurs in one brake control circuit, the brake can be engaged using the other brake control circuit, and it is thus possible to improve safety.

Also, as the operation in the brake control circuit from the operation unit onward is the same both when braking in accordance with a normal brake command and when braking when trouble occurs in the control circuit, the brake can be engaged in the same time when trouble occurs as when there is normal braking. Because of this, it is possible to prevent an accident such as motor burnout, runaway, or the like, caused by a delay in braking.

Furthermore, by including a function of monitoring overvoltage or overcurrent of the external switch drive power supply, and by executing a sequence check immediately after the brake power supply is turned on, it is possible to provide a brake control device such that safety is improved in comparison with that heretofore known.

### Brief Description of Drawings

[Fig. 1] Fig. 1 is a block diagram showing a first embodiment of the invention.
[Fig. 2] Fig. 2 is a timing chart of a sequence check in the first embodiment of the invention.
[Fig. 3] Fig. 3 is a block diagram showing a second embodiment of the invention.
[Fig. 4] Fig. 4 is a block diagram showing an example of an electromagnetic brake control device, which is not part of the invention.
[Fig. 5] Fig. 5 is a block diagram showing heretofore known technology of a motor control circuit having an electromagnetic brake.

### Description of Embodiments

Hereafter, based on the drawings, a description will be given of embodiments of the invention.

The following embodiments relate to a non-excitation operation type electromagnetic brake control device, in the same way as the previously described Fig. 5.

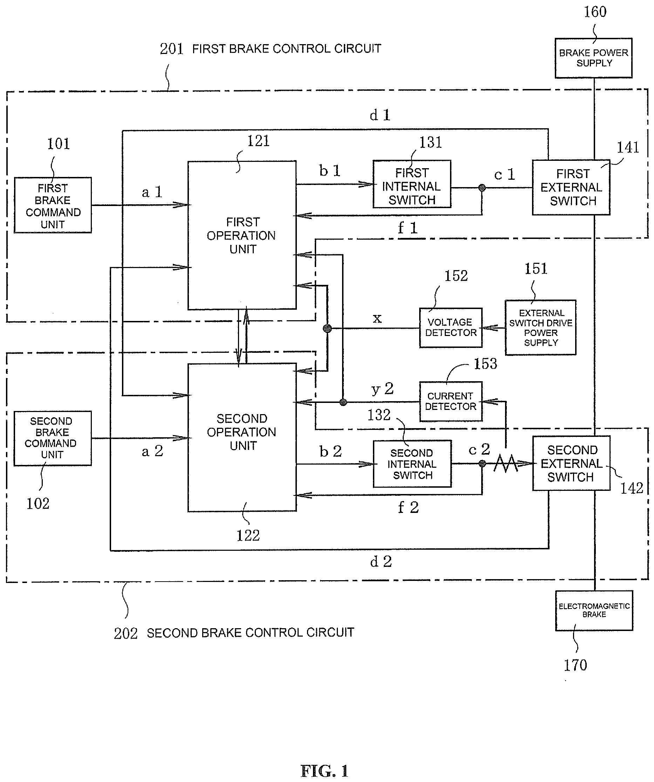

Fig. 1 is a circuit diagram showing a first embodiment of the invention. In Fig. 1, an exciting coil (not shown) of an electromagnetic brake 170 is connected via a series circuit of a first external switch 141 and second external switch 142 to a brake power supply 160 formed of a direct current power supply. Herein, the first external switch 141 and second external switch 142 are configured of, for example, main contacts of a relay.

A brake command a1 output from a first brake command unit 101 is input into a first operation unit 121, while a brake command a2 output from a second brake command unit 102 is input into a second operation unit 122. The first operation unit 121 and second operation unit 122 are configured of, for example, CPUs.

Herein, the brake commands a1 and a2 are output based on commands provided to the first brake command unit 101 and second brake command unit 102 from the exterior, and the principles of turning on and off the brake commands a1 and a2 are the same. Herein, setting is such that the electromagnetic brake 170 is released when the brake commands a1 and a2 are turned on, while the electromagnetic brake 170 is engaged (braking) when the brake commands a1 and a2 are turned off.

The first operation unit 121 generates an operation output signal b1 based on the brake command a1, an external feedback signal d2 from a second external switch 142, an internal feedback signal f1 from a first internal switch 131, to be described hereafter, a voltage abnormality signal x output from a voltage detector 152, and a current abnormality signal y2 output from a current detector 153.

In the same way, the second operation unit 122 generates an operation output signal b2 based on the brake command a2, an external feedback signal d1 from a first external switch 141, an internal feedback signal f2 from a second internal switch 132, to be described hereafter, the voltage abnormality signal x, and the current abnormality signal y.

Also, the first operation unit 121 and second operation unit 122 can transmit and receive information to and from each other.

The external feedback signals d1 and d2 are each at a "Low" level when the first external switch 141 and second external switch 142 are in an on-state, and at a "High" level when the first external switch 141 and second external switch 142 are in an off-state.

The operation output signal b1 of the first operation unit 121 is input into the first internal switch 131, and the first external switch 141 is turned on in accordance with a brake signal c1 generated by the first internal switch 131 being turned on. Also, the operation output signal b2 of the second operation unit 122 is input into the second internal switch 132, and the second external switch 142 is turned on in accordance with a brake signal c2 generated by the second internal switch 132 being turned on.

Herein, the brake signal c1 is input into the first operation unit 121 as the internal feedback signal f1, while the brake signal c2 is input into the second operation unit 122 as the internal feedback signal f2.

The first internal switch 131 and second internal switch 132 are configured of main contacts of, for example, semiconductor switches or relays.

151 is an external switch drive power supply. A power supply voltage supplied to the first external switch 141 and second external switch 142 from the external switch drive power supply 151 is detected by the voltage detector 152 and, when the detected voltage value exceeds a threshold, the voltage abnormality signal x is output. Also, 153 is a current detector that detects power supply current flowing to the second external switch 142 owing to the external switch drive power supply 151 (equal to power supply current flowing to the first external switch 141 owing to the external switch drive power supply 151), and when the detected current value exceeds a threshold, the current abnormality signal y2 is output.

The heretofore described configuration is such that the first brake command unit 101, first operation unit 121, first internal switch 131, and first external switch 141 configure a first brake control circuit 201, while the second brake command unit 102, second operation unit 122, second internal switch 132, and second external switch 142 configure a second brake control circuit 202.

Next, a description will be given of an operation of the first embodiment.

To start, a description will be given of a normal operation when there is no trouble such as a failure in any component of the first brake control circuit 201 or second brake control circuit 202.

Firstly, when the brake commands a1 and a2 output from the first brake command unit 101 and second brake command unit 102 are in an on-state, the first internal switch 131 is turned on in accordance with the operation output signal b1, and the brake signal c1 causes the first external switch 141 to be turned on. Simultaneously with this, the internal feedback signal f1 is input into the first operation unit 121. In the same way, the second internal switch 132 is turned on in accordance with the operation output signal b2, and the brake signal c2 causes the second external switch 142 to be turned on. Simultaneously with this, the internal feedback signal f2 is input into the second operation unit 122.

Also, the fact that the first external switch 141 and second external switch 142 are in an on-state is input into the second operation unit 122 and first operation unit 121 by the external feedback signals d1 and d2 respectively.

When the first brake control circuit 201 and second brake control circuit 202 operate normally as heretofore described, and moreover, the external switch drive power supply 151 is normal and neither the voltage abnormality signal x or current abnormality signal y2 is being generated, both of the serially connected first external switch 141 and second external switch 142 are in an on-state.

Because of this, power from the brake power supply 160 is supplied to the electromagnetic brake 170, and the exciting coil is excited, because of which the electromagnetic brake 170 is in a released (disengaged) state.

Also, when the brake commands a1 and a2 output from the first brake command unit 101 and second brake command unit 102 are in an off-state, each of the signals b1, b2, c1, and c2 is output with logic the opposite of that when the brake commands a1 and a2 are in an on-state, and both the first external switch 141 and second external switch 142 ultimately switch to an off-state.

Because of this, no power is supplied from the brake power supply 160 to the electromagnetic brake 170, and the exciting coil is not excited, because of which the electromagnetic brake 170 is in an engaged state.

Next, a description will be given of an operation when there is trouble such as failure in one of the first brake command unit 101, first operation unit 121, first internal switch 131, or first external switch 141 configuring the first brake control circuit 201, or when there is trouble in one of the second brake command unit 102, second operation unit 122, second internal switch 132, or second external switch 142 configuring the second brake control circuit 202.

In this case, for example, even when the brake commands a1 and a2 are turned off in order to engage the electromagnetic brake, one external switch out of the first external switch 141 and second external switch 142 is turned on, but as the other serially connected external switch is in an off-state, no power is supplied to the electromagnetic brake 170, and the electromagnetic brake 170 is in an engaged state.

When the voltage abnormality signal x or current abnormality signal y2 is generated, even when the first brake control circuit 201 and second brake control circuit 202 are normal, operation is carried out so that the first external switch 141 and second external switch 142 at a subsequent stage are turned off in accordance with the operation output signals b1 and b2 of the first operation unit 121 and second operation unit 122, whereby the electromagnetic brake 170 switches to an engaged state.

According to the heretofore described operation, when there is trouble in either the first brake control circuit 201 or second brake control circuit 202 or, with regard to the external switch drive power supply 151, when the voltage abnormality signal x or current abnormality signal y2 is generated, the electromagnetic brake 170 switches to an engaged state.

Because of this, it is possible to eliminate the danger of a motor or the like, which is the braking target of the electromagnetic brake 170, continuing to be operated when there is a failure of the electromagnetic brake control device.

According to the first embodiment, the power supply of the electromagnetic brake 170 is controlled by a control circuit duplicated by the brake control circuits 201 and 202. Further, the operation from the brake commands being output to the electromagnetic brake 170 actually being engaged is the same when there is a normal braking operation and when there is trouble in either of the brake control circuits 201 and 202, because of which there is no concern about the time until the brake is engaged increasing when trouble occurs, and it is possible to improve safety.

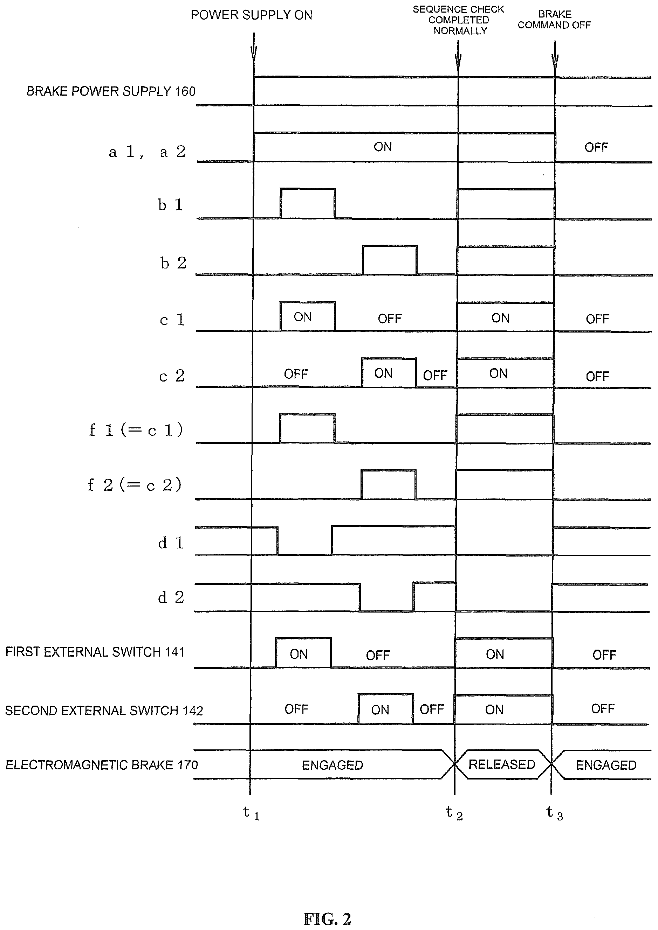

Next, Fig. 2 is a timing chart showing a sequence check for confirming whether the operation in the first embodiment is normal or abnormal.

In Fig. 2, the brake commands a1 and a2 are turned on simultaneously with the brake power supply 160 being turned on at a time t₁. The brake commands a1 and a2 and the operation of the electromagnetic brake 170 do not correspond from the time t₁ to a time t₂ at which the sequence finishes, with the brake commands a1 and a2 during this time being turned on in order to cause the operation output signals b1 and b2 to be sequentially generated.

As shown in Fig. 2, from the time t₁ onward, when the brake commands a1 and a2 are in an on-state, firstly, the operation output signal b1 is caused to be generated from the first operation unit 121 of the first brake control circuit 201, and it is confirmed whether the first internal switch 131 is normal or abnormal based on the state of the brake signal c1 (the internal feedback signal f1). Also, based on the state of the external feedback signal d1, the second operation unit 122 confirms whether the first external switch 141 is normal or abnormal.

Subsequently, the same kind of operation is also executed in the second brake control circuit 202, confirming whether the second internal switch 132 and second external switch 142 are normal or abnormal.

When trouble is detected by the first operation unit 121 or second operation unit 122, the first external switch 141 or second external switch 142 is immediately switched to an off-state, engaging the electromagnetic brake 170.

When the sequence check is completed normally at the time t₂, the first operation unit 121 and second operation unit 122, using the internal feedback signals f1 and f2, monitor whether the logic of the brake signals c1 and c2 is in accordance with the operation output signals b1 and b2. Also, both the first external switch 141 and second external switch 142 are turned on in accordance with the brake signals c1 and c2, releasing the electromagnetic brake 170, and the second operation unit 122 and first operation unit 121, using the external feedback signals d1 and d2, monitor whether the states of the first external switch 141 and second external switch 142 are in accordance with the operation output signals b1 and b2.

When trouble is detected by the first operation unit 121 or second operation unit 122 during this period, the first external switch 141 or second external switch 142 is switched to an off-state, immediately engaging the electromagnetic brake 170.

Subsequently, the brake commands a1 and a2, operation output signals b1 and b2, and brake signals c1 and c2 are turned off at a time t₃, and both the first external switch 141 and second external switch 142 are turned off, causing the electromagnetic brake 170 to wait in an engage-state.

As heretofore described, it is possible to confirm whether the operations of the first brake control circuit 201 and second brake control circuit 202 are normal or abnormal by a predetermined sequence check being automatically carried out when the electromagnetic brake control circuit is started up, and possible to further improve safety by a failure, wiring mistake, disconnection, or the like in any circuit being detected.

Also, when the voltage abnormality signal x or current abnormality signal y2 is generated, the electromagnetic brake 170 is controlled by the first operation unit 121 or second operation unit 122 so as to be engaged, because of which it is also possible to respond promptly to trouble in the external switch drive power supply 151.

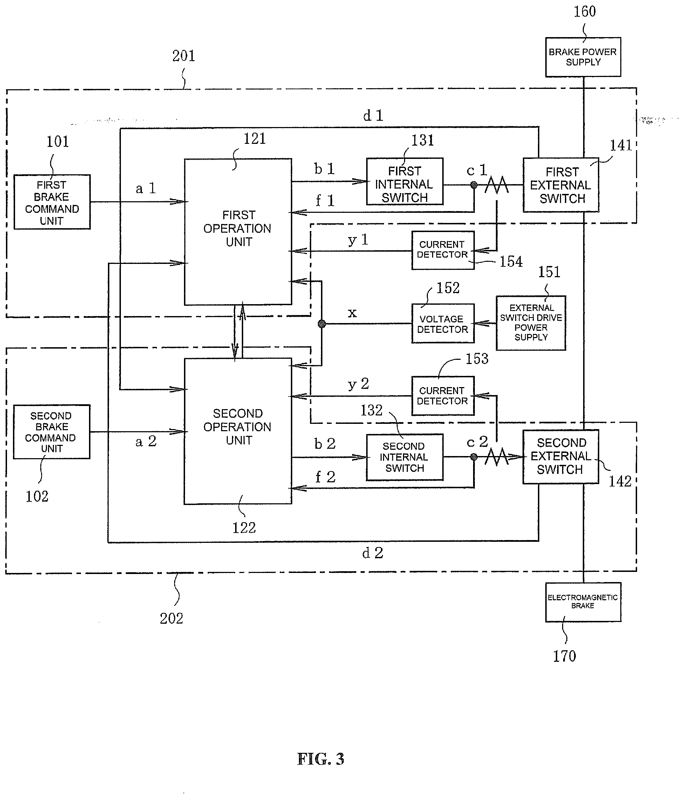

Next, Fig. 3 is a block diagram showing a second embodiment of the invention.

This embodiment is such that the current detector is duplicated so that trouble can be detected based on current flowing through the first external switch 141 owing to the external switch drive power supply 151. That is, a difference from the first embodiment is that a current detector 154 is provided on the first external switch 141 side in addition to the current detector 153 on the second external switch 142 side, and current abnormality signals y1 and y2 are input individually into the first operation unit 121 and second operation unit 122 respectively. As the other configurations are the same as in the first embodiment, a description will be omitted.

According to the second embodiment, the currents of the first external switch 141 and second external switch 142 drive power supply can be detected individually, because of which there is an advantage in that it is possible to detect overcurrent trouble with higher accuracy than in the first embodiment, further improving safety.

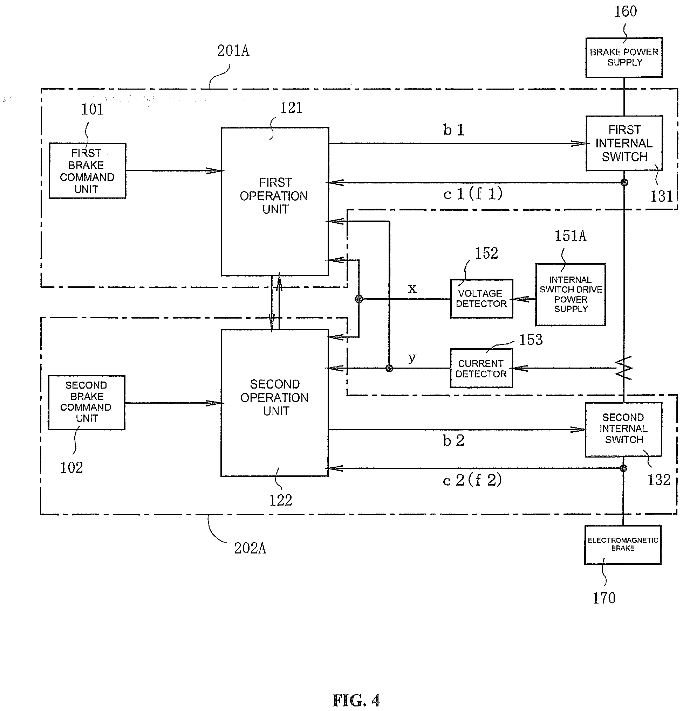

Fig. 4 is a block diagram showing an example of an electromagnetic brake control device, which is not part of the invention.

In Fig. 4, 201A is a first brake control circuit, and 202A is a second brake control circuit. According to this example, when the rated voltage of the first internal switch 131 and second internal switch 132 in the first embodiment and second embodiment is higher than the voltage of the brake power supply 160, the first internal switch 131 and second internal switch 132 are connected in series between the brake power supply 160 and electromagnetic brake 170 without the first external switch 141 and second external switch 142 being used.

In Fig. 4, the current detector 153 is disposed on only the second internal switch 132 side, but a current detector may also be disposed on the first internal switch 131 side, in the same way as in the second embodiment, and the currents of an internal switch drive power supply 151A driving the first internal switch 131 and second internal switch 132 individually detected, and input into the first and second operation units 121 and 122 respectively.

According to the example of fig. 4, which is not part of the invention, the first external switch 141 and second external switch 142 are rendered unnecessary, and monitoring circuits and operation processes in the first and second operation units 121 and 122 for monitoring operations of the first external switch 141 and second external switch 142 using feedback signals are also rendered unnecessary, whereby it is possible to reduce cost.

### Reference Signs List

- 101:: First brake command unit
- 102:: Second brake command unit
- 121:: First operation unit
- 122:: Second operation unit
- 131:: First internal switch
- 132:: Second internal switch
- 141:: First external switch
- 142:: Second external switch
- 151:: External switch drive power supply
- 151A:: Internal switch drive power supply
- 152:: Voltage detector
- 153, 154:: Current detector
- 160:: Brake power supply
- 170:: Electromagnetic brake
- 201, 201A:: First brake control circuit
- 202, 202A:: Second brake control circuit

## Claims

1. A non-excitation operation type electromagnetic brake control device configured such that an electromagnetic brake is engaged when an exciting coil is in a non-excited state, the electromagnetic brake control device including:
a first brake control circuit (201) having a first operation unit (121) configured to carry out an operation process in accordance with a brake command (a1) and a first switch (141) turned on in accordance with a brake signal generated based on an output signal (b1) of the first operation unit (121); and
a second brake control circuit (202) having a second operation unit (122) configured to carry out an operation process in accordance with a brake command (a2) and a second switch (142) turned on in accordance with a brake signal generated based on an output signal (b2) of the second operation unit (122) ;
the first switch (141) and second switch (142) are connected in series between a brake power supply (160) and the electromagnetic brake (170); and
the first operation unit (121) includes a function of feeding back and monitoring an operation signal (d2) of the second switch (142), and the second operation unit (122) includes a function of feeding back and monitoring an operation signal (d1) of the first switch (141);
the electromagnetic brake control device being **characterized in that** the output signal (b1) of the first operation unit (121) is input into a first internal switch (131), wherein the first switch (141) is turned on in accordance with the brake signal (c1) that is generated by the first internal switch (131) being turned on, wherein the brake signal (c1) generated by the first internal switch (131) is input into the first operation unit (121) as an internal feedback signal (f1) from the first internal switch (131), and wherein the first operation unit (121) is configured to use the internal feedback signal (f1) from the first internal switch (131) to monitor whether the logic of the brake signal (c1) generated by the first internal switch (131) is in accordance with the output signal of the first operation unit (121); and
**in that** the output signal of the second operation unit (122) is input into a second internal switch (132), wherein the second switch (142) is turned on in accordance with the brake signal (C2) that is generated by the second internal switch (132) being turned on, wherein the brake signal (c2) generated by the second internal switch (132) is input into the second operation unit (122) as an internal feedback signal (f2) from the second internal switch (132), and wherein the second operation unit (122) is configured to use the internal feedback signal (f2) from the second internal switch (132) to monitor whether the logic of the brake signal (c2) generated by the second internal switch (132) is in accordance with the output signal of the second operation unit (122).

2. The electromagnetic brake control device according to claim 1, **characterized in that** the first operation unit (121) includes a function of feeding back and monitoring a brake signal provided to the first switch (141), and the second operation unit (122) includes a function of feeding back and monitoring a brake signal provided to the second switch (142).

3. The electromagnetic brake control device according to claim 1 or 2, **characterized by** including
a voltage detector (152) for detecting a voltage abnormality of a drive power supply (151) configured to supply power supply voltage to the first switch (141) and second switch (142) and for outputting a voltage abnormality signal based on a value of the detected power supply voltage exceeding a threshold, wherein
the first operation unit (121) and second operation unit (122) are configured to carry out operation processes so that brake signals causing the first switch (141) and second switch (142) respectively to be turned off are caused to be output when the voltage abnormality signal is input.

4. The electromagnetic brake control device according to claim 1 or 2, **characterized by** including
a current detector (153) for detecting a current abnormality of a drive power supply (151) configured to supply power supply current to the first switch (141) and second switch (142) and for outputting a current abnormality signal based on a value of the detected power supply current exceeding a threshold, wherein
the first operation unit (121) and second operation unit (122) are configured to carry out operation processes so that brake signals causing the first switch (141) and second switch (142) respectively to be turned off are caused to be output when the current abnormality signal is input.

5. The electromagnetic brake control device according to claim 1, **characterized by** including
a voltage detector (152) for detecting a voltage abnormality of a drive power supply (151) configured to supply power supply voltage to the first switch (141) and second switch (142) and outputs a voltage abnormality signal based on a value of the detected power supply voltage exceeding a threshold, wherein
the first operation unit (121) and second operation unit (122) are configured to carry out operation processes so that brake signals causing the first switch (141) and second switch (142) respectively to be turned off are caused to be output when the voltage abnormality signal is input.

6. The electromagnetic brake control device according to claim 1, **characterized by** including
a current detector (153) for detecting a current abnormality of a drive power supply (151) configured to supply power supply voltage to the first switch (141) and second switch (142) and for outputting a current abnormality signal based on a value of the detected power supply voltage exceeding a threshold, wherein
the first operation unit (121) and second operation unit (122) are configured to carry out operation processes so that brake signals causing the first switch (141) and second switch (142) respectively to be turned off are caused to be output when the current abnormality signal is input.

7. The electromagnetic brake control device according to claim 1, **characterized in that** the device is configured such that brake commands are sequentially input into the first operation unit (121) and second operation unit (122) immediately after the turning on of the brake power supply (160), and
the first operation unit (121) and second operation unit (122) execute a sequence check that monitors whether or not brake signals provided to each of the first switch (141) and second switch (142) and operation signals of the first switch (141) and second switch (142) correspond.

8. The electromagnetic brake control device according to claim 1, **characterized in that** the first switch (141) and second switch (142) are configured of main contacts of a relay.

9. The electromagnetic brake control device according to claim 6, **characterized in that** the current detector (153) is severally disposed corresponding to the first switch (141) and second switch (142), a current abnormality signal from the current detector (153) corresponding to the first switch (141) is input into the first operation unit (121), and a current abnormality signal from the current detector (153) corresponding to the second switch (142) is input into the second operation unit (122).

## Patentansprüche

1. Elektromagnetische Nichterregungsbetrieb-Bremssteuerungsvorrichtung, die derart konfiguriert ist, dass eine elektromagnetische Bremse betätigt wird, wenn sich eine Erregerspule in einem Nichterregungszustand befindet, wobei die elektromagnetische Bremssteuerungsvorrichtung umfasst:
eine erste Bremssteuerungsschaltung (201), die eine erste Betriebseinheit (121), die konfiguriert ist, einen Betriebsvorgang gemäß einem Bremsbefehl (a1) auszuführen, und einen ersten Schalter (141) aufweist, der gemäß einem Bremssignal eingeschaltet wird, das basierend auf einem Ausgangssignal (b1) der ersten Betriebseinheit (121) erzeugt wird; und
eine zweite Bremssteuerungsschaltung (202), die eine zweite Betriebseinheit (122), die konfiguriert ist, einen Betriebsvorgang gemäß einem Bremsbefehl (a2) auszuführen, und einen zweiten Schalter (142) aufweist, der gemäß einem Bremssignal eingeschaltet wird, das basierend auf einem Ausgangssignal (b2) der zweiten Betriebseinheit (122) erzeugt wird;
wobei der erste Schalter (141) und der zweite Schalter (142) zwischen einer Bremsstromversorgung (160) und der elektromagnetischen Bremse (170) in Reihe verbunden sind; und
die erste Betriebseinheit (121) eine Funktion des Rückführens und Überwachens eines Betriebssignals (d2) des zweiten Schalters (142) umfasst und die zweite Betriebseinheit (122) eine Funktion des Rückführens und Überwachens eines Betriebssignals (d1) des ersten Schalters (141) umfasst;
wobei die elektromagnetische Bremssteuerungsvorrichtung **dadurch gekennzeichnet ist, dass**
das Ausgangssignal (b1) der ersten Betriebseinheit (121) in einen ersten internen Schalter (131) eingegeben wird, wobei der erste Schalter (141) gemäß dem Bremssignal (c1) eingeschaltet wird, das dadurch erzeugt wird, dass der erste interne Schalter (131) eingeschaltet wird, wobei das Bremssignal (c1), das durch den ersten internen Schalter (131) erzeugt wird, als ein internes Rückkopplungssignal (f1) von dem ersten internen Schalter (131) in die erste Betriebseinheit (121) eingegeben wird, und wobei die erste Betriebseinheit (121) konfiguriert ist, das interne Rückkopplungssignal (f1) von dem ersten internen Schalter (131) zu verwenden, um zu überwachen, ob die Logik des von dem ersten internen Schalter (131) erzeugten Bremssignals (c1) in Übereinstimmung mit dem Ausgangssignal der ersten Betriebseinheit (121) ist; und
dass das Ausgangssignal der zweiten Betriebseinheit (122) in einen zweiten internen Schalter (132) eingegeben wird, wobei der zweite Schalter (142) in Übereinstimmung mit dem Bremssignal (C2) eingeschaltet wird, das dadurch erzeugt wird, dass der zweite interne Schalter (132) eingeschaltet wird,
wobei das von dem zweiten internen Schalter (132) erzeugte Bremssignal (c2) als ein internes Rückkopplungssignal (f2) von dem zweiten internen Schalter (132) in die zweite Betriebseinheit (122) eingegeben wird, und wobei die zweite Betriebseinheit (122) konfiguriert ist, das interne Rückkopplungssignal (f2) von dem zweiten internen Schalter (132) zu verwenden, um zu überwachen, ob die Logik des von dem zweiten internen Schalter (132) erzeugten Bremssignals (c2) in Übereinstimmung mit dem Ausgangssignal der zweiten Betriebseinheit (122) ist.

2. Elektromagnetische Bremssteuerungsvorrichtung nach Anspruch 1, **dadurch gekennzeichnet, dass** die erste Betriebseinheit (121) eine Funktion des Rückführens und Überwachens eines an den ersten Schalter (141) bereitgestellten Bremssignals umfasst und die zweite Betriebseinheit (122) eine Funktion des Rückführens und Überwachens eines an den zweiten Schalter (142) bereitgestellten Bremssignals umfasst.

3. Elektromagnetische Bremssteuerungsvorrichtung nach Anspruch 1 oder 2, **gekennzeichnet durch** Umfassen
eines Spannungsdetektors (152) zum Detektieren einer Spannungsanomalie einer Antriebsstromversorgung (151), die konfiguriert ist, dem ersten Schalter (141) und dem zweiten Schalter (142) eine Stromversorgungsspannung zu liefern, und zum Ausgeben eines Spannungsanomalitätssignals basierend darauf, dass ein Wert der detektierten Stromversorgungsspannung einen Schwellenwert überschreitet, wobei
die erste Betriebseinheit (121) und die zweite Betriebseinheit (122) konfiguriert sind, Betriebsvorgänge auszuführen, sodass bewirkt wird, dass Bremssignale ausgegeben werden, die bewirken, dass entsprechend der erste Schalter (141) und der zweite Schalter (142) ausgeschaltet werden, wenn das Spannungsanomalitätssignal eingegeben wird.

4. Elektromagnetische Bremssteuerungsvorrichtung nach Anspruch 1 oder 2, **gekennzeichnet durch** Umfassen
eines Stromdetektors (153) zum Detektieren einer Stromanomalie einer Antriebsstromversorgung (151), die konfiguriert ist, dem ersten Schalter (141) und dem zweiten Schalter (142) einen Stromversorgungsstrom zu liefern, und zum Ausgeben eines Stromanomalitätssignals basierend darauf, dass ein Wert des detektierten Stromversorgungsstroms einen Schwellenwert überschreitet, wobei
die erste Betriebseinheit (121) und die zweite Betriebseinheit (122) konfiguriert sind, Betriebsvorgänge auszuführen, sodass bewirkt wird, dass Bremssignale ausgegeben werden, die bewirken, dass entsprechend der erste Schalter (141) und der zweite Schalter (142) ausgeschaltet werden, wenn das Stromanomalitätssignal eingegeben wird.

5. Elektromagnetische Bremssteuerungsvorrichtung nach Anspruch 1, **gekennzeichnet durch** Umfassen
eines Spannungsdetektors (152) zum Detektieren einer Spannungsanomalie einer Antriebsstromversorgung (151), die konfiguriert ist, dem ersten Schalter (141) und dem zweiten Schalter (142) eine Stromversorgungsspannung zu liefern, der ein Spannungsanomalitätssignal basierend darauf ausgibt, dass ein Wert der detektierten Stromversorgungsspannung einen Schwellenwert überschreitet, wobei
die erste Betriebseinheit (121) und die zweite Betriebseinheit (122) konfiguriert sind, Betriebsvorgänge auszuführen, sodass bewirkt wird, dass Bremssignale ausgegeben werden, die bewirken, dass entsprechend der erste Schalter (141) und der zweite Schalter (142) ausgeschaltet werden, wenn das Spannungsanomalitätssignal eingegeben wird.

6. Elektromagnetische Bremssteuerungsvorrichtung nach Anspruch 1, **gekennzeichnet durch** Umfassen
eines Stromdetektors (153) zum Detektieren einer Stromanomalie einer Antriebsstromversorgung (151), die konfiguriert ist, dem ersten Schalter (141) und dem zweiten Schalter (142) eine Stromversorgungsspannung zu liefern, und zum Ausgeben eines Stromanomalitätssignals basierend darauf, dass ein Wert der detektierten Stromversorgungsspannung einen Schwellenwert überschreitet, wobei
die erste Betriebseinheit (121) und die zweite Betriebseinheit (122) konfiguriert sind, Betriebsvorgänge auszuführen, sodass bewirkt wird, dass Bremssignale ausgegeben werden, die bewirken, dass entsprechend der erste Schalter (141) und der zweite Schalter (142) ausgeschaltet werden, wenn das Stromanomalitätssignal eingegeben wird.

7. Elektromagnetische Bremssteuerungsvorrichtung nach Anspruch 1, **dadurch gekennzeichnet, dass**
die Vorrichtung derart konfiguriert ist, dass unmittelbar nach dem Einschalten der Bremsstromversorgung (160) Bremsbefehle in die erste Betriebseinheit (121) und die zweite Betriebseinheit (122) sequenziell eingegeben werden, und
die erste Betriebseinheit (121) und die zweite Betriebseinheit (122) eine Sequenzprüfung ausführen, die überwacht, ob sich Bremssignale, die an den ersten Schalter (141) und den zweiten Schalter (142) bereitgestellt werden, und Betriebssignale des ersten Schalters (141) und des zweiten Schalters (142) entsprechen oder nicht.

8. Elektromagnetische Bremssteuerungsvorrichtung nach Anspruch 1, **dadurch gekennzeichnet, dass** der erste Schalter (141) und der zweite Schalter (142) von Hauptkontakten eines Relais konfiguriert sind.

9. Elektromagnetische Bremssteuerungsvorrichtung nach Anspruch 6, **dadurch gekennzeichnet, dass** der Stromdetektor (153) entsprechend dem ersten Schalter (141) und dem zweiten Schalter (142) getrennt angeordnet ist, ein Stromanomalitätssignal von dem Stromdetektor (153), der dem ersten Schalter (141) entspricht, in die erste Betriebseinheit (121) eingegeben wird, und ein Stromanomalitätssignal von dem Stromdetektor (153), der dem zweiten Schalter (142) entspricht, in die zweite Betriebseinheit (122) eingegeben wird.

## Revendications

1. Dispositif de commande de frein électromagnétique du type à opération sans excitation, configuré de sorte qu'un frein électromagnétique est engagé lorsqu'une bobine d'excitation est dans un état non excité, le dispositif de commande de frein électromagnétique comprenant :
un premier circuit de commande de frein (201) présentant une première unité d'opération (121) configurée de manière à mettre en œuvre un processus d'opération conformément à une commande de frein (a1), et un premier commutateur (141) activé conformément à un signal de frein généré sur la base d'un signal de sortie (b1) de la première unité d'opération (121) ; et
un second circuit de commande de frein (202) présentant une seconde unité d'opération (122) configurée de manière à mettre en œuvre un processus d'opération conformément à une commande de frein (a2), et un second commutateur (142) activé conformément à un signal de frein généré sur la base d'un signal de sortie (b2) de la seconde unité d'opération (122) ;
dans lequel le premier commutateur (141) et le second commutateur (142) sont connectés en série entre une alimentation électrique de frein (160) et le frein électromagnétique (170) ; et
la première unité d'opération (121) inclut une fonction de rétroaction et de surveillance d'un signal d'opération (d2) du second commutateur (142), et la seconde unité d'opération (122) inclut une fonction de rétroaction et de surveillance d'un signal d'opération (d1) du premier commutateur (141) ;
le dispositif de commande de frein électromagnétique étant **caractérisé en ce que** :
le signal de sortie (b1) de la première unité d'opération (121) est appliqué en entrée dans un premier commutateur interne (131), dans lequel le premier commutateur (141) est activé conformément au signal de frein (c1) qui est généré par le premier commutateur interne (131) activé, dans lequel le signal de frein (c1) généré par le premier commutateur interne (131) est appliqué en entrée dans la première unité d'opération (121), en tant qu'un signal de rétroaction interne (f1) provenant du premier commutateur interne (131), et dans lequel la première unité d'opération (121) est configurée de manière à utiliser le signal de rétroaction interne (f1) provenant du premier commutateur interne (131) pour surveiller si la logique du signal de frein (c1) généré par le premier commutateur interne (131) est conforme au signal de sortie de la première unité d'opération (121) ; et
**en ce que** le signal de sortie de la seconde unité d'opération (122) est appliqué en entrée dans un second commutateur interne (132), dans lequel le second commutateur (142) est activé conformément au signal de frein (c2) qui est généré par le second commutateur interne (132) activé, dans lequel le signal de frein (c2) généré par le second commutateur interne (132) est appliqué en entrée dans la seconde unité d'opération (122), en tant qu'un signal de rétroaction interne (f2) provenant du second commutateur interne (132), et dans lequel la seconde unité d'opération (122) est configurée de manière à utiliser le signal de rétroaction interne (f2) provenant du second commutateur interne (132) pour surveiller si la logique du signal de frein (c2) généré par le second commutateur interne (132) est conforme au signal de sortie de la seconde unité d'opération (122).

2. Dispositif de commande de frein électromagnétique selon la revendication 1, **caractérisé en ce que** la première unité d'opération (121) inclut une fonction de rétroaction et de surveillance d'un signal de frein fourni au premier commutateur (141), et la seconde unité d'opération (122) inclut une fonction de rétroaction et de surveillance d'un signal de frein fourni au second commutateur (142).

3. Dispositif de commande de frein électromagnétique selon la revendication 1 ou 2, **caractérisé en ce qu'**il inclut :
un détecteur de tension (152) destiné à détecter une anomalie de tension d'une alimentation électrique d'entraînement (151) configurée de manière à fournir une tension d'alimentation électrique au premier commutateur (141) et au second commutateur (142), et à fournir en sortie un signal d'anomalie de tension sur la base d'une valeur de la tension d'alimentation électrique détectée dépassant un seuil, dans lequel :
la première unité d'opération (121) et la seconde unité d'opération (122) sont configurées de manière à mettre en œuvre des processus d'opération de sorte que des signaux de frein occasionnant la désactivation du premier commutateur (141) et du second commutateur (142), respectivement, sont amenés à être fournis en sortie lorsque le signal d'anomalie de tension est appliqué en entrée.

4. Dispositif de commande de frein électromagnétique selon la revendication 1 ou 2, **caractérisé en ce qu'**il inclut :
un détecteur de courant (153) destiné à détecter une anomalie de courant d'une alimentation électrique d'entraînement (151) configurée de manière à fournir un courant d'alimentation électrique au premier commutateur (141) et au second commutateur (142) et à fournir en sortie un signal d'anomalie de courant sur la base d'une valeur du courant d'alimentation électrique détecté dépassant un seuil, dans lequel :
la première unité d'opération (121) et la seconde unité d'opération (122) sont configurées de manière à mettre en œuvre des processus d'opération de sorte que des signaux de frein occasionnant la désactivation du premier commutateur (141) et du second commutateur (142), respectivement, sont amenés à être fournis en sortie lorsque le signal d'anomalie de courant est appliqué en entrée.

5. Dispositif de commande de frein électromagnétique selon la revendication 1, **caractérisé en ce qu'**il inclut :
un détecteur de tension (152) destiné à détecter une anomalie de tension d'une alimentation électrique d'entraînement (151) configurée de manière à fournir une tension d'alimentation électrique au premier commutateur (141) et au second commutateur (142),
et à fournir en sortie un signal d'anomalie de tension sur la base d'une valeur de la tension d'alimentation électrique détectée dépassant un seuil, dans lequel :
la première unité d'opération (121) et la seconde unité d'opération (122) sont configurées de manière à mettre en œuvre des processus d'opération de sorte que des signaux de frein occasionnant la désactivation du premier commutateur (141) et du second commutateur (142), respectivement, sont amenés à être fournis en sortie lorsque le signal d'anomalie de tension est appliqué en entrée.

6. Dispositif de commande de frein électromagnétique selon la revendication 1, **caractérisé en ce qu'**il inclut :
un détecteur de courant (153) destiné à détecter une anomalie de courant d'une alimentation électrique d'entraînement (151) configurée de manière à fournir une tension d'alimentation électrique au premier commutateur (141) et au second commutateur (142), et à fournir en sortie un signal d'anomalie de courant sur la base d'une valeur de la tension d'alimentation électrique détectée dépassant un seuil, dans lequel :
la première unité d'opération (121) et la seconde unité d'opération (122) sont configurées de manière à mettre en œuvre des processus d'opération de sorte que des signaux de frein occasionnant la désactivation du premier commutateur (141) et du second commutateur (142), respectivement, sont amenés à être fournis en sortie lorsque le signal d'anomalie de courant est appliqué en entrée.

7. Dispositif de commande de frein électromagnétique selon la revendication 1, **caractérisé en ce que** :
le dispositif est configuré de sorte que des commandes de frein sont appliquées en entrée séquentiellement dans la première unité d'opération (121) et la seconde unité d'opération (122), immédiatement après l'activation de l'alimentation électrique de frein (160) ; et
la première unité d'opération (121) et la seconde unité d'opération (122) exécutent un contrôle de séquence qui surveille si des signaux de frein fournis à chaque commutateur parmi le premier commutateur (141) et le second commutateur (142), et des signaux d'opération du premier commutateur (141) et du second commutateur (142), correspondent ou non.

8. Dispositif de commande de frein électromagnétique selon la revendication 1, **caractérisé en ce que** le premier commutateur (141) et le second commutateur (142) sont configurés comme des contacts principaux d'un relais.

9. Dispositif de commande de frein électromagnétique selon la revendication 6, **caractérisé en ce que** le détecteur de courant (153) est disposé solidairement en correspondance avec le premier commutateur (141) et le second commutateur (142), **en ce qu'**un signal d'anomalie de courant provenant du détecteur de courant (153) correspondant au premier commutateur (141) est appliqué en entrée dans la première unité d'opération (121), et **en ce qu'**un signal d'anomalie de courant provenant du détecteur de courant (153) correspondant au second commutateur (142) est appliqué en entrée dans la seconde unité d'opération (122).
